# EUROPÄISCHE PATENTSCHRIFT

(11) **EP 2 456 658 B1**
(45) Veröffentlichungstag und Bekanntmachung des Hinweises auf die Patenterteilung: **09.01.2013**
(21) Anmeldenummer: 09777339.4
(22) Anmeldetag: 21.07.2009
(51) Int. Cl.: B63B 25/22, B63B 27/00, B62B 3/00, B65G 1/133, B65G 35/06

(54) **BEHÄLTERSYSTEM UND LOGISTIKSYSTEM FÜR SCHIFFE**
CONTAINER SYSTEM AND LOGISTICS SYSTEM FOR SHIPS
SYSTÈME DE RÉCIPIENTS ET SYSTÈME LOGISTIQUE POUR NAVIRES

(43) Veröffentlichungstag der Anmeldung: 30.05.2012
(73) Patentinhaber: Pruin, Berend, 21423 Winsen (DE)
(72) Erfinder: Pruin, Berend, 21423 Winsen (DE)
(74) Vertreter: Heim, Hans-Karl
(86) Internationale Anmeldenummer: PCT/EP2009/005291
(87) Internationale Veröffentlichungsnummer: WO 2011/009472

(56) Entgegenhaltungen:
- EP-A1- 1 406 051
- EP-A1- 1 526 058
- US-A1- 2004 233 041

## Beschreibung

Die Erfindung betrifft ein Behältersystem zum Transport und zur Lagerung von Gütern auf Schiffen sowie ein entsprechendes Logistiksystem für Schiffe, bei dem das Behältersystem eingesetzt werden kann.

Die Ausrüstung von Schiffen mit Gütern für die nächste Fahrt bedarf nicht nur einer detaillierten Vorplanung für die erforderlichen Güter, sondern bringt auch einen hohen Zeitbedarf und großes Handling-Erfordernis bei der Versorgung mit sich. Es ist bisher auch eine sehr unterschiedliche Art von Transportbehältnissen wie Boxen, Containern oder Behältnissen mit Verbrauchsgütern erforderlich, die manuell an Ort in Staubereiche umgeladen werden müssen.

Insgesamt gesehen bedarf es daher einer verbesserten Effizienz bei der Ausstattung von auf Fahrt gehenden Schiffen. Dies gilt speziell für Mehrzweckschiffe, Forschungsschiffe oder Explorationsschiffe, aber auch für Fahrgastschiffe und auf Arbeitsschiffen aller Art mit einer enormen Vielzahl unterschiedlichster Verbrauchsgüter und Ersatzteile.

Unter dem Allgemeinbegriff der Güter werden daher im umfassendsten Sinn alle Produkte verstanden, die nicht über Leitungen wie für Wasser oder Treibstoffen, dem Schiff zugeführt werden. Beispielsweise Proviant, Getränke und Bedarfsartikel für Fahrgastschiffe oder wissenschaftliche Geräte und Laborausrüstungen für Forschungsschiffe aber auch mechanische Baugruppen und Ersatzteile für den Schiffsbetrieb.

Bei den bisherigen Ladevorgängen für diese Güter wurden diese Güter teilweise manuell und teilweise über Lesegeräte erfasst. Diese Güter wurden dann an Bord gebracht und dort meist manuell in entsprechende Stauräume oder Kühlräume und dergleichen umgeladen und die entsprechenden Behältnisse zurück auf die Pier verfrachtet.

Im laufenden Schiffsbetrieb, meist auf See, konnten sich daraus Umladevorgänge ergeben, die auch dazu führten, dass genaue Daten über Anzahl und Ort der entsprechenden Güter nicht unmittelbar zur Verfügung standen, da eine permanente Lagerkontrolle nicht gegeben war. Insbesondere für Forschungsschiffe und den für eine Vielzahl von Aufgaben während einer Forschungsreise erforderlichen Geräten und Ausrüstungsgegenständen, besteht das Erfordernis, sehr genau über die Verfügbarkeit und den Ort der entsprechenden Geräte und Güter informiert zu sein.

Es besteht daher das Bedürfnis die land- und bordseitigen Erfordernisse für den Transport von Gütern auf Schiffen integrativ zu realisieren, um bestmögliche Informationen über die zu stauenden und verstauten Güter an Bord zu haben.

Elemente für eine verbesserte Effizienz bei derartigen Ladevorgängen auf Schiffen zeigt die DE 20 2008 007 269 U1. Darin ist eine Palettenlageranlage für den Einsatz auf Schiffen beschrieben, wobei die Paletten für unterschiedliche Güter geeignet sind. Zur Erfassung im Rahmen der Lagerhaltung werden auch RFID-Tags erwähnt.

Diese Palettenlageranlage ist auch in der EP 1 406 051 A1, die als relevantester Stand der Technik angesehen wird, beschirieben. Die dort gezeigten Paletten und darauf gestapelten Güter bilden jedoch für sich keine eigenständig verfahrbare Einheit, sondern es sind vielmehr zwei Transportwagen in Längsrichtung und in Querrichtung des entsprechenden Lagers erforderlich, um die entsprechenden beladenen Paletten an ihren Bestimmungsort im Lager zu bringen.

Aus der DE 10 2006 054 083 A1 ist ein System zur automatisierten Lagerhaltung bekannt, wobei auch auf Stapler oder einen Kran als Ladehilfe verwiesen wird.

In der DE 203 02 969 U1 wird ein integriertes Transportsystem beschrieben, in dem Europaletten mit der Bereitstellung auf definierten Plätzen in einem Lager vorgesehen sind. Dieses System ist als integriertes Regallager für ein Transportschiff vorgesehen.

Zur Identifizierung von Gütern sind entsprechend den US 2004/0 233 041 A1 beziehungsweise US 2007/0 213 869 A1 die Verwendung von RFID-ähnlichen Tags für ein Cargo-Management-System beschrieben, wobei auch der Einsatz auf Schiffen nicht ausgeschlossen wird.

Aus der EP 1 246 094 A1 ist ein Logistiksystem bekannt, in dem Container mit einem Tag für eine Identifikationskennung versehen sind. Die Verfolgung, des Transportweges ist daher auch bis an Bord eines Schiffes möglich.

Es ist jedoch kein eigenständig verfahrbares Behältersystem entnehmbar, das auch eine automatische Führung von Einheiten des Behältersystems ermöglicht.

Die vorausgehend genannten und bekannten Systeme zeigen zwar Einzelaspekte bei der Verbesserung des Transportes und der Lagerung von Gütern, unter anderem auch auf Schiffen.

Eine Verbesserung in Richtung eines Gesamtkonzeptes für die Bereitstellung, den Transport und die Lagerung von Schiffsgütern ist jedoch daraus nicht erkennbar.

Der Erfindung liegt daher die **Aufgabe** zugrunde, die vorausgehend genannten Nachteile zu überwinden und ein Behältersystem und Logistiksystem für den Gütertransport bei der Schiffsausrüstung zu schaffen, welches einen hohen Effizienzgrad erreicht und weitgehend auch automatisch abwickelbar ist, sowie auch auf See Sicherheit und Handhabbarkeit bietet und in Art eines Managementsystems eine hohe Verfügbarkeit und rasche Bereitstellungsmöglichkeit für die Güter schafft.

Diese Aufgabe wird einerseits mit einem Behältersystem gemäß Anspruch 1 gelöst und zum anderen in integrativer Verwirklichung mit einem Logistiksystem nach Anspruch 8.

Das erfindungsgemäße Behältersystem zum Transport und zur Lagerung von Gütern auf Schiffen ist insbesondere bei einem Schiffs-Logistiksystem einsetzbar und hat mindestens ein Behältermodul mit einem Basismodul und darauf angeordnet oder anordenbar mindestens ein sich in Höhenrichtung erstreckendes Aufbaumodul, wobei die Module mit einem oder mehreren Aufnahmebereichen für Güter ausgestattet sind. Das Basismodul weist dabei eine Transporteinrichtung, insbesondere in Art eines unteren Transport-Rahmens auf. Hierbei ist die Transporteinrichtung für mehrere unterschiedliche Transportmittel automatischer, halbautomatischer oder mechanisch-manueller Art ausgebildet. Des Weiteren ist mindestens eine Fixiereinrichtung des Behältersystems vorhanden, die relativ zum Decksboden und/oder relativ zur Decke und/oder relativ zu den Seitenbegrenzungen, die operative Festlegung des Behältersystems ermöglicht.

Das weitere erfindungsgemäße Logistiksystem für Schiffe, das ein bordseitig und landseitig einsetzbares Behältersystem, insbesondere der vorausgehend beanspruchten Art aufweist, hat auch eine mindestens jeder Einheit des Behältersystems zugeordnete Identifikations-Kennung. Des Weiteren ist ein Erkennungssystem vorgesehen, das mindestens den Standort und/oder einen vorgebbaren Bestimmungs- oder Stauplatz jeder einzelnen Einheit des Behältersystems und/oder deren Inhalt erfassbar macht. Es ist weiterhin eine zentrale Rechnereinheit zur Verarbeitung der vom Erkennungssystem erhaltenen Daten mit gespeicherten Daten und zur Steuerung der Einheiten des Behältersystems vorgesehen, wobei mindestens bordseitig vorgebbare Transportwege für die Einheiten des Behältersystems vorhanden sind und das Behältersystem selbst als Transportmittel und bordseitiges Lager für die auf dem Schiff verbleibenden Güter ausgebildet ist.

Ein wesentlicher Kerngedanke ist hierbei, ein Logistiksystem für Schiffe für die unterschiedlichen Güter im Hinblick auf den Transport, die Bereitstellung und die Verfügbarkeit für einen Schiffseinsatz zu schaffen, das mit hoher Effizienz und weitestgehend automatisch realisierbar ist.

Dieses Logistiksystem soll auch auf sich oft heftig bewegenden Schiffen und vollem Schiffsbetrieb operabel sein. Dies bedeutet einerseits, dass die Verfügbarkeit der erforderlichen Güter für eine zu bewältigende Aufgabe gegeben ist, zum Beispiel Niederbringung einer Forschungsbohrung, wobei im Hinblick auf die erforderlichen Güter wie Bohrrohre, Verbindungsmuffen etc. am Ort des Bedarfes diese weitgehend automatisch bereitgestellt werden können. Die Verfügbarkeit und der Lagerort derartiger Güter kann über eine zentrale Rechnereinheit ermittelt werden und das entsprechende Gut kann zwischen Lagerort und Bedarfsort auf einem vorgegebenen Transportweg zum Bedarfsort verbracht werden.

Bei kleinvolumigen Gütern erfolgt dies zweckmäßigerweise mittels entsprechender Behältersysteme und zum Beispiel automatisch geführter Fahreinheiten (AGV; Automatic Guided Vehicles). Bei größeren Gütern kann dies mittels offener Behältnisse oder Tragvorrichtungen erfolgen.

Im Hinblick auf eine zeitliche und kostenmäßige Effizienzverbesserung kann das im Logistiksystem eingesetzte Behältersystem landseitig bereits kommissioniert werden. Beim Transport der Behältermodule des Behältersystems an Bord eines Schiffes werden diese Behältermodule vorzugsweise durch ein Scanner-Gate gefahren, so dass die Identifikations-Kennung jeder Einheit des Behältersystems automatisch erfasst werden kann. Auch ein Auslesen der entsprechenden Identifikations-Kennung mittels eines personengehaltenen Lesegerätes ist möglich. Die ausgelesenen Daten werden vom Lesegerät des Erkennungssystems verkabelt oder drahtlos, insbesondere über Funk, zu einer zentralen Rechnereinheit übertragen. Zentrale Recheneinheiten an Bord von Schiffen und an Land können auf Befehl oder bei automatischen Verfahren drahtlos miteinander kommunizieren. Die in der zentralen Rechnereinheit gespeicherten Daten erkennen den vorgegebenen Bestimmungs- oder Stauplatz eines bestimmten Gutes und steuern die entsprechende Einheit des Behältersystems auf einem vorgegebenen Transportweg an den Stauplatz. Das Behältersystem ist hierbei nicht nur Transportmittel für das entsprechende Gut sondern gleichzeitig auch das bordseitige Lager für das Gut, so dass ein Umladen der Güter in stationäre Regale an Bord nicht mehr erforderlich ist.

Das Logistiksystem, das auch die Schritte eines Logistikverfahrens umfasst, ist so ausgelegt, dass jede Einheit des Behältersystems und die darin enthaltenen Güter nach Art, Anzahl, Spezifikation und Ort erfassbar und über die zentrale Rechnereinheit abrufbar ist.

Als Identifikations-Kennungseinrichtungen kommen vor allen Dingen maschinenlesbare Labels in Frage, die wasserfeste Labels sein sollten und bei Strichcode-Kennung mittels eines Barcode-Scanners oder Lesestiftes erfassbar sind. Als äußerst vorteilhaft sollten RFID-Tags eingesetzt werden, wobei durch Einlaminieren in eine Papierschicht und gleichzeitige Klebebeschichtung RFID-Klebeetiketten erzeugt werden. Diese können dann einfach und bereits an Land oder bei an Bord generierten Erzeugnissen auf den entsprechenden einzelnen Gütern, in Einheiten des Behältersystems und den Behältermodulen angebracht werden.

Diese Art der Identifikation und Erfassung ermöglicht daher eine Real-Time-Erfassung, so dass jederzeit die Verfügbarkeit eines bestimmten Gutes und deren Stauplatz an Bord der Schiffe oder auch an Land abrufbar sind.

Dieses Logistik- und Leitsystem bietet daher den Vorteil von just-in-time-deliveries der gewünschten Güter, Nachbestellung oder Umdisponierungen von Gütern mit dem landseitigen Schiffsversorger. Dieses zentrale Logistiksystem mit genauer Erfassung der Güter, Waren und Produkte bietet auch erhebliche Vorteile bei der Gestaltung des Verpflegungs- beziehungsweise Bewirtungsplanes auf Schiffen, insbesondere auf Fahrgastschiffen.

Die Transportwege des Logistiksystems sind zweckmäßigerweise zur automatischen Führung von Einheiten des Behältersystems ausgelegt. Insbesondere eignen sich hierfür induktive bodenseitig, wand- oder deckenseitig vorgesehene Mittel, die auch als Führungsleitungen für die Transportfahrzeuge installiert sein können.

Auch kann die automatische Führung mittels optischer Mittel, wie Laser- oder Abtaststrahl, gesteuert oder mittels Zielpunkten in Verbindung mit Laser- oder IR-Strahlen erfolgen.

Als Fahreinheiten für Behältermodulsysteme werden bevorzugt AGVs eingesetzt, die auch als Unterfahrgeräte für das Behältermodul dienen können. Die automatische Steuerung und Führung auf den entsprechenden Transportwegen kann durch Laserabtastung der Transportwege, zum Beispiel von Wänden, Ecken, Türen etc. der Transportwege im Vergleich mit dem in der zentralen Rechnereinheit gespeicherten virtuellen Bild des entsprechenden Transportweges erreicht werden.

Die Transportwege sind daher zweckmäßigerweise primär für die Befahrbarkeit mit Einheiten des Behältersystems ausgelegt, wobei eine gegenseitige Adaption vorhanden ist. So sollte zum Beispiel ein Behältermodul nach Möglichkeit die Abmessungen von 120 cm x 80 cm (L x B) und eine entsprechende Sicherheitshöhe nicht überschreiten.

Da die zu einem vorgegebenen Stellplatz transportierten Einheiten des Behältersystems einschließlich Güter selbst das Lager am Stellplatz beziehungsweise im Stauraum bilden bzw. bilden können, werden Umladevorgänge für die entsprechenden Güter an Bord überflüssig. Des Weiteren bedarf es in diesen Fällen auch keiner stationär im Schiff vorhandenen Staueinrichtungen. Fest eingebaute Regale oder dergleichen werden auf ein Bedarfsminimum reduziert.

Die vorgegebenen Transportwege für Güter und Behältersystem sind für jedes entsprechende Schiffsdeck, auf dem die Bereitstellung von Gütern gewährleistet sein muss, festgelegt. Die Verfahrbarkeit von einem unteren zu einem oberen Deck oder umgekehrt ist über entsprechende Aufzüge sichergestellt. Vergleichbares gilt auch bei einer Kombination mit einem Landbetrieb für die Zulieferung.

Eine weitere Verbesserung erfährt das Logistiksystem beim Einsatz von automatisch geleiteten Fahreinheiten (AGV), welche die Einheiten des Behältersystems von deren Stauort zu ihrem Bestimmungsplatz rechnergesteuert verfahren können.

Diese Fahreinheiten können fern- oder lasergesteuert oder visualisiert geführt werden.

Das erfindungsgemäße Behältersystem zum Transport und/oder der Lagerung von Gütern zielt darauf ab, standardisierte Behältermodule einzusetzen, die weitgehend für alle Arten von auf dem Schiff zu transportierenden Gütern geeignet sind. Dies gilt selbstverständlich auch auf See und bei Seegang oder sich aus anderen Gründen bewegende Schiffen.

Zusätzlich kann es auf Schiffen, insbesondere Forschungsschiffen, für relativ schwere Güter, zum Beispiel 20'-Container, auch weitere Transportmittel oder Schleppeinrichtungen geben, um derartige schwere Güter am Bedarfsort zur Verfügung zu stellen. Gleiches gilt zum Beispiel auch für aus dem Meeresboden gezogene Bohrkerne oder sonstige Proben und Elemente.

Das standardisierte Behältersystem ist vorteilhafterweise so aufgebaut, dass ein entsprechendes Behältermodul ein Basismodul aufweist, auf dem Aufbaumodule stapelbar angebracht werden können. Abhängig von den zu transportierenden Produkten und Gütern haben die Module unterschiedliche Höhenmaße, wobei eine maximale Höhe im Hinblick auf die Transportwege und die Gesamthöhe der Stauräume nicht überschritten werden darf.

Im Hinblick auf die Standardisierung weist jedes Basismodul eine Transporteinrichtung in Art eines unteren Transport-Rahmens auf. Dieser integrierte oder mit dem Basismodul verbundene Transportrahmen ist so ausgelegt, dass unterschiedliche Transportmittel, insbesondere automatischer, halbautomatischer oder mechanisch-manueller Art, eingesetzt werden können, wodurch die Transportflexibilität erheblich verbessert wird.

Als automatische Transportmittel können zum Beispiel Unterfahrgeräte etwa vom Typ "Compact" eingesetzt werden. Diese flachen Trägerfahrzeuge sind üblicherweise mit einer Hubeinrichtung eingerichtet. Die Trägerfahrzeuge können die umgekehrte U-Form des Transportrahmens unterfahren und aufgrund ihrer Hubeinrichtung das gesamte Behältermodul einschließlich darin gestauter Güter geringfügig anheben. Die Steuerung derartiger Trägerfahrzeuge kann dann über die zentrale Rechnereinheit vom Stauort zum Bedarfsort über vorgegebene Transportwege erfolgen.

Zur Steuerung auf dem Transportsweg kann das Trägerfahrzeug (AGV) mittels eines Laserstrahl-Abtast-Verfahrens im Vergleich mit dem virtuell eingegebenen Transportweg, der in der zentralen Rechnereinheit gespeichert ist, durchgeführt werden.

Andere Transportmittel wie Hubgabelstapler oder Elektrogabelstapler sind ebenfalls möglich. Hierfür sind im Transportrahmen entsprechende Öffnungen für die normierten Gabeln vorgesehen. Diese Öffnungen sind zweckmäßigerweise in den Schenkeln der U-Form des Transportrahmens, also etwa quer zur Ausrichtung der U-förmigen Öffnung, vorgesehen.

Das Behältermodul weist an der Unterseite des Transportrahmens zweckmäßigerweise mindestens vier Lenkrollen auf. Hierdurch wird einerseits auch ein manuelles Verschieben eines Behältermoduls ermöglicht. Zum anderen können diese Führungsrollen insbesondere am Stauplatz und dem Stauraum in Eingriff mit bodenseitigen Führungsschienen gebracht werden, so dass eine Ankopplung mit anderen Behältermodulen möglich ist und auf diese Weise ein modulartiges Lager mit einer Mehrzahl von Behältermodulen entsteht. Das einzelne Behältermodul selbst kann geeigneterweise über Feststellbremsen stationär gehalten werden. Im Regelfall sollte bei mehreren Behältermodulen auch eine Deckenfixierung vorgesehen sein, um auch bei stärkeren Schiffsbewegungen oder Seegang die stationäre Sicherheit der Behältermodule zu gewährleisten. Eine derartige Deckenfixierung kann anhand eines Schienensystems an der Decke im Eingriff mit der oberen Seite des Behältermoduls erfolgen. Auch eine Arretierung mittels kurzer Stangen oder Drahtseile gegenüber der Decke ist möglich.

Die Behältermodule sollten standardisierte Abmessungen in der Grundfläche haben, zum Beispiel 120 cm x 80 cm (L x B), wobei jedoch das Höhenmaß der einzelnen Module unterschiedlich sein kann, zum Beispiel 10 cm bis 100 cm.

Die derart mit Lenkrollen ausgestatteten Behältermodule können auch als Roll-Racks bezeichnet werden und sind zweckmäßigerweise mit reibschlüssiger oder formschlüssiger Arretierungsmöglichkeit gegenüber dem Decksboden ausgestattet.

Die Behältermodule und Aufbaumodule können schubladenartig ausgelegt oder als Klappenbehälter ausgebildet sein. Abhängig von den Gütern können auch einfache Gittermodule vorgesehen sein, deren Festigkeit insbesondere durch Viereck-Säulen oder Stangen gewährleistet ist.

Auch ist es möglich, die Aufbautenmodule zum Bespiel mit Forminlets auszustatten, um kleine Transportgüter, wie Elektronikteile, Werkzeuge oder Schrauben aufnehmen zu können.

Im Hinblick auf ein integriertes Logistiksystem für alle Güter können die Behälter-Racks und die einzelnen Module mit einer Identifizierungs-Kennung ausgestattet werden. Vorteilhafterweise werden hierfür RFID-Tags mit Transpondern eingesetzt. Diese Art der Identifizierung erlaubt auch eine Pulk-Erfassung. Dies bedeutet, dass nicht mehr jedes einzelne Gut separat erfasst werden muss, sondern zum Beispiel der Inhalt von Gütern eines Aufbaumoduls in einem Abtastvorgang aufgenommen werden kann.

Ein weiterer Vorteil besteht in der bidirektionalen Kommunikation, so dass zum Beispiel die Transponder eines Aufbaumoduls bei einer Aufnahme von anderen Gütern, zum Beispiel mittels eines hand-hold-Eingabeterminals, was geeigneterweise WLANfähig sein sollte, umprogrammiert werden können.

Auch Code-Streifen als Strich-Code oder Barcode sind in verschiedenen Bereichen einsetzbar. Die gravierenden Vorteile von RFID-Tags, welche wasserfest sind und auch bei Schmutzablagerungen darauf lesbar sind, sprechen jedoch eindeutig für diese Transponderart.

Da die Transportmöglichkeit der Behältermodule auch bei Schiffsbewegungen, z. B. bei Seegang gegeben sein muss, sind die Transportwege vorzugsweise im unteren Wandbereich mit Führungsmitteln, zum Beispiel Führungsschienen ausgestattet, die mit komplementären Haltemitteln am Transportfahrzeug oder auch am Behältermodul, insbesondere im unteren Transportrahmen in Eingriff bringbar sind und auf diese Weise auch bei Seegang ein sicheres Verfahren der Behältermodule gewährleisten.

Die Behältermodule beziehungsweise Behälter-Racks können auch miteinander über komplementäre Verbindungsmittel zu größeren Einheiten, zum Beispiel drei oder zehn Einheiten, fixiert werden. Auf diese Weise können einerseits mehrere Behältermodule gemeinsam transportiert und verfahren werden. Zum anderen gewährleistet dies insbesondere im Staubereich eine hohe Sicherheit und Festigkeit des modulartig aufgebauten Behälterlagers.

Je nach Einsatzzweck und Bestimmungsort an Bord der Schiffe können die Behältermodule aus Kunststoff oder aus Metall, insbesondere Alu bestehen.

Auch Paletten-Racks, Gitterboxen, Zarges-Boxen sind als Transporteinheiten möglich. Insgesamt sollte jedoch ein standardisiertes Behältersystem genutzt werden, so dass die Automatisierung des Transportes derartiger Behältnisse sichergestellt werden kann.

Die Erfindung wird nachfolgend anhand schematischer Zeichnungen beispielhaft noch näher erläutert. Es zeigen:
- Fig. 1: eine perspektivische Ansicht eines Behältermoduls mit Unterfahrgerät;
- Fig. 2: eine vereinfachte Darstellung eines mittels mehrerer Behältermodule gebildeten Stauregales in einem Schiffsdeck; und
- Fig. 3: eine schematische Darstellung eines erfindungsgemäßen Logistiksystems mit den wesentlichen Einheiten und Verfahrensschritten für den Transport von Gütern vom Land auf das Schiff und nachfolgend im Schiff an einen definierten Bestimmungsort.

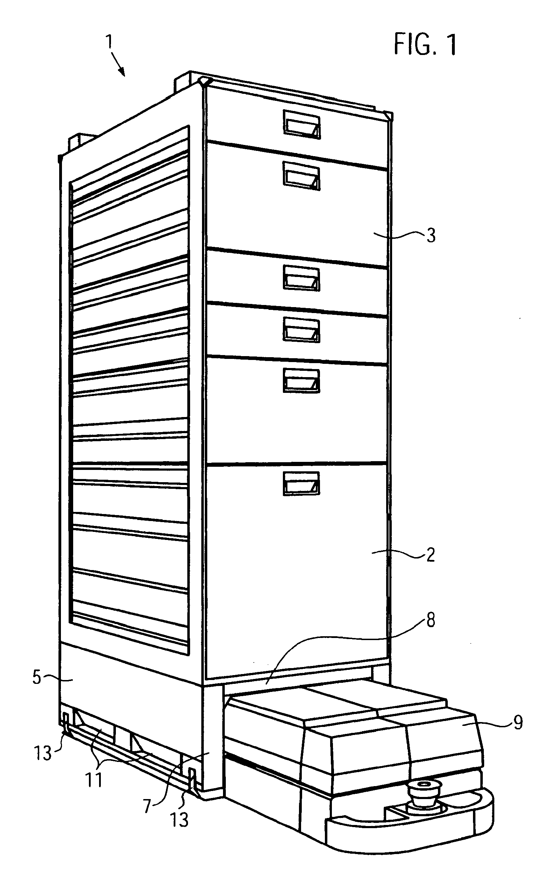

Die schematische Darstellung nach Fig. 1 zeigt in perspektivischer Ansicht ein einzelnes Behältermodul 1 beziehungsweise ein Roll-Rack. Das Basismodul 2 weist nach unten einen Transportrahmen 5 auf, der im Wesentlichen ein umgekehrtes U bildet.

Auf dem Basismodul 2 sind mehrere Aufbaumodule 3, die im Beispiel schubladenartig ausgebildet sind, gestapelt. An der Vorderseite ist ein Griffbereich vorgesehen.

Die umgekehrte U-Form des Transportrahmens 5 bildet eine Unterfahröffnung 8, in die ein Unterfahrgerät 9 (AVG), insbesondere automatisch gesteuert, eingefahren werden kann. Das mit dem Unterfahrgerät 9 integrierte Hubsystem kann anschließend das gesamte Behältermodul einschließlich darin gelagerter Güter etwas anheben, so dass die gesamte Einheit des Behältermoduls verfahrbar ist.

Ein derartiges Unterfahrgerät 9 kann zentral gesteuert seitens der Rechnereinheit von seinem Stellplatz zum bestimmungsgemäßen Behältermodul 1 geleitet werden, so dass das gesamte Behältermodul über vorgegebene Transportwege zum Bestimmungs- beziehungsweise Bedarfsort transportiert beziehungsweise verfahren werden kann.

Das Unterfahrgerät kann mittels insbesondere optischer Abtastung des Transportweges einerseits den richtigen Transportweg verifizieren und andererseits auch eventuell im Transportweg vorhandene Hindernisse beachten, beziehungsweise das gesamte Behältermodul stoppen.

Im Hinblick auf alternative Transportmittel weist der untere Transportrahmen 5 etwa quer zur U-förmigen Öffnung Eingriffsöffnungen 11 für die Gabel von Hubwagen oder Elektrogabelstapler auf, so dass auch ein halb-automatischer Transport oder personengeführter Transport möglich ist.

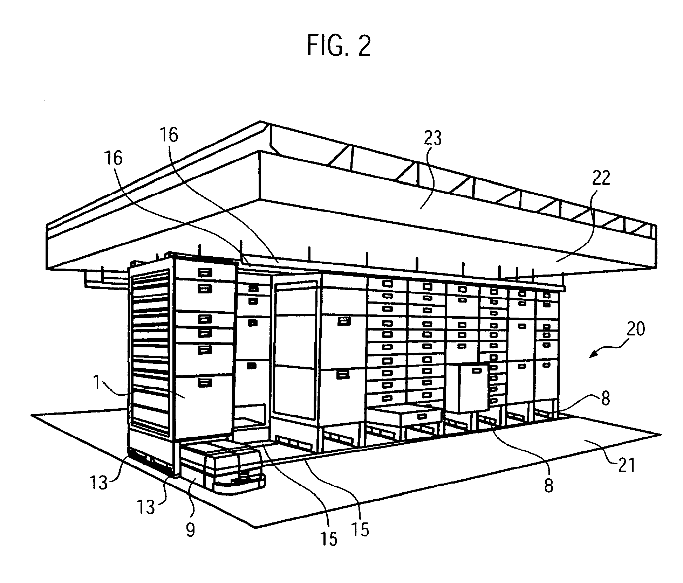

Das Behältermodul 1 und insbesondere der untere Bereich des Transportrahmens 5 ist vorteilhafterweise mit Lenkrollen 13 (Fig. 2) ausgestattet. Dies ermöglicht auch ein manuelles Verschieben eines entsprechenden Behältermoduls. Im Transportrahmen, vorzugsweise im Bereich der Lenkrollen werden geeigneterweise Feststellbremsen vorgesehen, so dass das Behältermodul 1 auch an jeder Stelle des Schiffsdecks stationär platziert werden kann.

Die Module des Behältermoduls 1 haben im Querschnitt ein Standardmaß, wobei unterschiedliche Höhenmaße der stapelbaren Aufbaumodule 3 möglich sind. Die Gesamthöhe wird durch die Höhe der Transportwege und der Höhe des entsprechenden Stauplatzes oder Stauraums bestimmt.

In Fig. 2 ist schematisch eine Art Regallager mit einzelnen Behältermodulen 1, zum Beispiel in einem Schiffsdeck, gezeigt. Der Stauraum 20 weist auf dem Decksboden 21 fest installierte Befestigungsmöglichkeiten, z. B. Bodenschienen 15, und deckenseitige Befestigungsmöglichkeiten, z. B. Deckenschienen 16, auf. In dieses Schienensystem können die einzelnen Behältermodule 1 eingefahren werden, so dass ein zusammenhängendes Stauregal entsteht.

Die am oberen Deckenaufbau 23 abgehängten beziehungsweise herunterragenden Deckenschienen 16 ermöglichen auch die obere Fixierung und Arretierung der entsprechenden Behältermodule, so dass gerade im Hinblick auf Schiffsbewegungen und Seegang ein sicheres Behälter- und Regalsystem geschaffen wird.

Die Anordnung erlaubt es auch, dass einzelne in einer Regalreihe vorhandene Behältermodule mittels eines entsprechenden Unterfahrgerätes 9 direkt von diesem Platz an einen Bestimmungsort transportiert werden können.

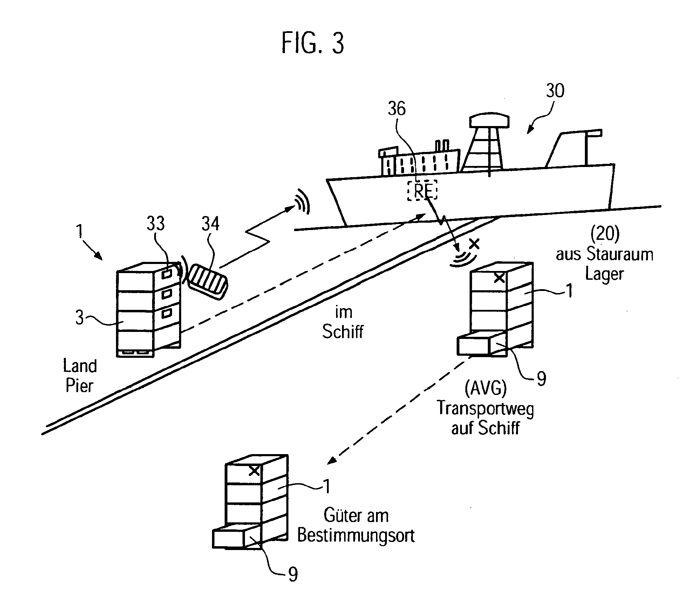

In Fig. 3 ist schematisch ein Logistiksystem mit den wesentlichen Einheiten und Verfahrensschritten zur Ausrüstung eines Schiffes mit in einem Behältersystem vorgesehenen Gütern und der nachfolgenden Verwendung dieses Behältersystems zum schiffsinternen Transport von Gütern an einen definierten Bestimmungsort gezeigt.

An Land oder auf der Pier werden die Behältermodule 1 des Behältersystems komplett mit den entsprechenden Gütern kommissioniert. Die Module 3 eines Behältermoduls 1 erhalten ebenso wie diese selbst eine Identifikations-Kennung, vorzugsweise als RFID-Tag. Die Funktionsweise von RFID-Tags im Hinblick auf Auslesen der gespeicherten Information sowie auch die Möglichkeit des Umprogrammierens der Tags ist bekannt.

Die Identifikations-Kennung wird zum Beispiel mittels eines Lesegerätes 34, welches als Handgerät dargestellt ist, ausgelesen und per Funk bereits an die zentrale Rechnereinheit 36 auf dem Schiff 30 übertragen.

Gegebenenfalls können auch Tor-Scanner verwendet werden, durch die die entsprechenden Behältermodule 1 mit Gütern geführt werden. Es ist auch möglich, im Sinne einer Pulk-Erfassung die im Behältermodul 1 kommissionierten Güter nach Art, Anzahl, Bestimmung etc. zu erfassen.

Sobald die Behältermodule 1 an Bord des Schiffes 30 verladen oder transportiert sind, was mittels Kran oder einem direkten Einfahren, zum Beispiel mittels Schienen in das Schiff, realisiert werden kann, kann der interne Schiffstransport im Sinne eines Teils des Logistiksystems in Funktion gesetzt werden. Das automatische Verfahren zum Transport eines Behältermoduls in einen bestimmten Staubereich ist in Fig. 3 nicht dargestellt.

Vereinfachend ist jedoch der weitere Vorgang im Schiff gezeigt, sofern bestimmte Güter aus einem Stauraum 20 des Schiffes 30 an einen Bestimmungsort verbracht werden sollen.

Von der zentralen Rechnereinheit 36 werden über ein elektromagnetisches Steuersignal, welches auch erst im Stauraum 20 abgestrahlt werden kann und bis dahin leitungsgebunden verläuft, die entsprechenden Daten und Anweisungen erzeugt.

Das ausgestrahlte Steuersignal wird zum Beispiel von einem Unterfahrgerät 9 (AVG) aufgenommen, so dass dieses im Stauraum 20 zu dem mit den gewünschten Gütern beladenen Behältermodul 1 (auch x) geleitet wird. Das entsprechende Behältermodul 1 wird durch das Unterfahrgerät 9 leicht angehoben und automatisch oder halbautomatisch zum entsprechenden Bestimmungsort gefahren, so dass die angeforderten Güter dort bereitgestellt werden.

Das entsprechende Unterfahrgerät 9 kann dann mit oder ohne Beladung an seinen Bereitstellungsort zurückgeführt werden.

Das erfindungsgemäße Behältersystem zum Transport und der Lagerung von Gütern ist in diesem Sinn wesentlicher Bestandteil des vorausgehend beschriebenen Schiffs-Logistiksystems, wobei Letzteres eigenständigen Erfindungscharakter hat. Die Integration des beanspruchten Behältersystems in ein Schiffs-Logistiksystem erzeugt einen synergistischen Effekt, der eine Real-Time-Bestandserfassung der vorhandenen Güter sowie eine weitgehende automatische Bereitstellung der Güter am Bedarfsort über ein EDV-gesteuertes Leitsystem ermöglicht.

## Patentansprüche

1. Behältersystem zum Transport und zur Lagerung von Gütern auf Schiffen, die mindestens ein Schiffsdeck mit Decksboden und Decke aufweisen, insbesondere für ein Logistiksystem für Schiffe,
- mit mindestens einem Behältermodul (1), das ein Basismodul (2) und darauf angeordnet oder anordenbar mindestens ein sich in Höhenrichtung erstreckendes Aufbaumodul (3) aufweist,
- wobei die Module (2, 3) mit einem oder mehreren Aufnahmebereichen für Güter ausgestattet sind,
**dadurch gekennzeichnet,**
- **dass** das Basismodul (2) eine Transporteinrichtung (5) in Art eines unteren Transport-Rahmens (5) aufweist,
- **dass** der Transport-Rahmen (5) als Roll-Rahmen ausgebildet ist,
- **dass** die Transporteinrichtung (5) für mehrere unterschiedliche Transportmittel automatischer, halbautomatischer oder mechanisch-manueller Art, ausgebildet ist,
- **dass** jedes Behältermodul (1) mindestens eine Fixiereinrichtung relativ zu einem Decksboden (21) und/oder relativ zu einer Decke (22) aufweist,
- **dass** der Transport-Rahmen (5) in einer Richtung des Basismoduls (2) etwa umgekehrte U-Form (8) zum Unterfahren und Transportieren mittels eines Unterfahrgerätes (9) aufweist,
- **dass** etwa quer zur U-Form (8) in deren Schenkeln (7) Eingriffsöffnungen (11) für andere Transportmittel, insbesondere für Gabeln von Gabelstaplern oder Hubwagen, vorgesehen sind, und
- **dass** das Behältersystem selbst als Transportmittel und schiffseitiges Lager ausgebildet ist.

2. Behältersystem nach Anspruch 1,
**dadurch gekennzeichnet,**
**dass** der Transport-Rahmen (5) mit Lenkrollen (13), ausgebildet ist und dass die Fixiereinrichtung als Feststellbremse der Lenkrollen (13), als reibschlüssige oder formschlüssige gegen beziehungsweise in den Decksboden (21) absenkbare Arretierung ausgelegt ist.

3. Behältersystem nach einem der Ansprüche 1 bis 2,
**dadurch gekennzeichnet,**
**dass** das Behältermodul (1) Euro-Maß-Kompatibilität aufweist und insbesondere ein abgestimmtes Höhenraster für das Innenmaß von Standard-Containern mit unterschiedlicher Länge und/oder den Stauplatz beziehungsweise Stauraum aufweist.

4. Behältersystem nach einem der Ansprüche 1 bis 3,
**dadurch gekennzeichnet,**
**dass** das Behältermodul (1) als Behälter-Rack ausgebildet ist,
**dass** abhängig von den zu stauenden Gütern die Module (2, 3) des Behälter-Racks (1) als Schub- oder Klappenbehälter mit unterschiedlicher Höhe, als Gitterbehältnis oder als mit Eck- beziehungsweise Zwischenstäben ausgestattetes Behältnis, gegebenenfalls mit Forminlets, gestaltet sind.

5. Behältersystem nach einem der Ansprüche 1 bis 4,
**dadurch gekennzeichnet,**
**dass** jedes Behälter-Rack (1) und/oder jedes Modul (2, 3) mit einer Identifizierungs-Kennung (33), insbesondere als Code-Streifen, als Transponder oder als RFID-Tag (33) versehen ist.

6. Behältersystem nach einem der Ansprüche 1 bis 5,
**dadurch gekennzeichnet,**
**dass** die Behälter-Racks (1) komplementäre Verbindungsmittel zur festen Fixierung miteinander und/oder mit dem Unterfahrgerät (9) aufweisen, und dass die Behälter-Racks (1), Halte- beziehungsweise Führungsmittel für die sichere Verfahrbarkeit im/auf dem Schiff aufweisen.

7. Behältersystem nach einem der Ansprüche 1 bis 6,
**dadurch gekennzeichnet,**
**dass** die Behälter-Racks (1) für stauraum-spezifische Anordnung ausgelegt sind und das Lagersystem, insbesondere Lagerregal, eines entsprechenden Stauraumes (20) bilden.

8. Logistiksystem für Schiffe
- mit einem bordseitig und landseitig einsetzbaren Behältersystem nach einem der Ansprüche 1 bis 7,
- mit einer mindestens jeder Einheit (1) des Behältersystems zugeordneten Identifikations-Kennung (33),
- mit einem mindestens den Standort und/oder einen vorgebbaren Bestimmungs- oder Stauplatz (20) jeder einzelnen Einheit (1) des Behältersystems und/oder deren Inhalt erfassenden Erkennungssystem (33, 34),
- mit einer zentralen Rechnereinheit (36) zur Verarbeitung der vom Erkennungssystem (33, 34) erhaltenen Daten mit gespeicherten Daten und zur Steuerung der Einheiten (1) des Behältersystems, insbesondere in Kombination mit einer Rechnereinheit an Land,
**dadurch gekennzeichnet,**
- **dass** mindestens bordseitig vorgebbare Fahr-Transportwege für die Einheit (1) des Behältersystems vorgesehen sind,
- **dass** die Transportwege auch zur automatischen Führung von Einheiten (1) des Behältersystems ausgelegt sind, und
- **dass** das Behältersystem selbst als Transportmittel und bordseitiges Lager für die auf dem Schiff (30) verbleibenden Güter ausgebildet ist.

9. Logistiksystem nach Anspruch 8,
**dadurch gekennzeichnet,**
**dass** die Einheiten (1) des Behältersystems an Land mit den Gütern bestückbar sind,
**dass** die bestückten Einheiten (1) des Behältersystems auf das Schiff (30) transportierbar sind,
**dass** jede Einheit (1) des Behältersystems über die Identifikations-Kennung (33) mittels des Erkennungssystems (34) erfassbar und mittels der zentralen Rechnereinheit (36) automatisch oder personenbetätigt über die vorgebbaren Transportwege zu seinem Bestimmungsplatz (20) verfahrbar ist.

10. Logistiksystem nach einem der Ansprüche 8 bis 9,
**dadurch gekennzeichnet,**
**dass** jede Einheit (1) des Behältersystems mit ihren Gütern mittels des Erkennungssystems (33, 34) nach Art, Anzahl, Spezifikation und Ort erfassbar und abrufbar ist.

11. Logistiksystem nach einem der Ansprüche 8 bis 10,
**dadurch gekennzeichnet,**
**dass** die Identifikations-Kennung (33) mittels RFID-Tags, Code-Labels oder dergleichen realisiert ist.

12. Logistiksystem nach einem der Ansprüche 8 bis 11,
**dadurch gekennzeichnet,**
**dass** die Transportwege mit induktiven boden-, wand- oder deckenseitigen Mitteln, wie Führungsleitungen, oder mittels optischer Mittel, wie laserstrahlgesteuert oder abtaststrahlgesteuert, wie mittels Zielpunkten in Verbindung mit Laser- oder IR-Strahlen, ausgelegt sind.

13. Logistiksystem nach einem der Ansprüche 8 bis 12,
**dadurch gekennzeichnet,**
**dass** die zum vorgegebenen Stellplatz transportierten Einheiten (1) des Behältersystems am Stellplatz selbst das Lager (20) bilden.

14. Logistiksystem nach einem der Ansprüche 8 bis 13,
**dadurch gekennzeichnet,**
**dass** Einheiten (1) des Behältersystems mittels Fahreinheiten (9), insbesondere mittels automatisch geleiteter Fahreinheiten (AGV), von deren Standort über vorgegebene Transportwege zu ihrem Bestimmungsplatz verfahrbar sind.

15. Logistiksystem nach Anspruch 14,
**dadurch gekennzeichnet,**
**dass** die Fahreinheiten (9) fern- oder strahlgesteuert auf den vorgegebenen Transportwegen, insbesondere laserstrahlgesteuert und/oder visualisiert, geführt sind.

16. Logistiksystem nach einem der Ansprüche 8 bis 15,
**dadurch gekennzeichnet,**
**dass** die Transportwege und das Behältersystem zueinander adaptiert sind und dass insbesondere für die Stauplätze pro Schiffsdeck (21) ein Haupttransportweg vorgesehen ist.

## Claims

1. Container system for transporting and storing articles on ships which comprise at least one ship deck with a deck floor and ceiling, in particular for a logistics system for ships,
- having at least one container module (1) which comprises a base module (2) and at least one build-on module (3) extending in height direction which is arranged or can be arranged thereon,
- wherein the modules (2, 3) are equipped with one or more receiving areas for articles,
**characterised in that**
- the base module (2) comprises a transport means (5) in the manner of a lower transport frame (5),
- the transport frame (5) is designed as a roll frame,
- the transport means (5) is designed for a plurality of different transport means of an automatic, semi-automatic or manual mechanical type,
- each container module (1) comprises at least one fixing means relative to a deck floor (21) and / or relative to a ceiling (22),
- the transport frame (5) comprises in a direction of the base module (2) an approximately reverse U-shape (8) for under-driving and transporting by means of an under-driving unit (9),
- engagement openings (11) for other transport means, in particular for forks of forklift trucks or lifting carriages, are provided approximately transversely to the U-shape (8) in the limbs (7) thereof, and
- the container system itself is formed as a transport means and on-ship store.

2. Container system according to claim 1,
**characterised in that**
the transport frame (5) is designed with guide rollers (13) and
the fixing means is designed as a locking brake of the guide rollers (13), as a friction-locking or shape-locking detent means which can be lowered against or into the deck bottom (21).

3. Container system according to one of claims 1 to 2,
**characterised in that**
the container module (1) has euro dimension compatibility and comprises in particular an adapted height grid for the inner dimension of standard containers with different length and / or the place of storage or storage room.

4. Container system according to one of the claims 1 to 3,
**characterised in that**
the container module (1) is formed as a container rack,
in dependence upon the articles to be stored the modules (2, 3) of the container rack (1) are formed as push or flap containers with a different height, as a wire mesh container or as a container with corner or intermediate bars, possibly with form inlets.

5. Container system according to one of the claims 1 to 4,
**characterised in that**
each container rack (1) and / or each module (2, 3) is provided with an identifier (33), in particular as a barcode, as a transponder or as an RFID tag (33).

6. Container system according to one of the claims 1 to 5,
**characterised in that**
the container racks (1) comprise complementary connection means for secure fixing with each other and / or with the under-driving unit (9), and
the container racks (1) comprise holding or guiding means for ensuring secure movement in / on the ship.

7. Container system according to one of the claims 1 to 6,
**characterised in that**
the container racks (1) are designed for storage room specific arrangement and form the storage system, in particular storage shelf, of a corresponding storage room (20).

8. Logistics system for ships with
- a container system according to one of the claims 1 to 7 which can be used on board and on land,
- an identifier (33) assigned to at least each unit (1) of the container system,
- a recognition system (33, 34) detecting at least the location and / or a predefinable place of destination or storage (20) of each individual unit (1) of the container system and / or the content thereof,
- a central computer unit (36) for processing the data obtained by the recognition system (33, 34) with stored data and for controlling the units (1) of the container system, in particular in combination with a computer unit on land,
**characterised in that**
- transport paths for the unit (1) of the container system are provided which can be predefined at least on board,
- the transport paths are also designed for automatic guiding of units (1) of the container system, and
- the container system itself is designed as a transport means and on board store for the articles remaining on the ship (30).

9. Logistics system according to claim 8,
**characterised in that**
the units (1) of the container system can be equipped on land with the articles,
the equipped units (1) of the container system can be transported to the ship (30), each unit (1) of the container system can be detected via the identifier (33) by means of the recognition system (34) and moved by means of the central computer unit (36) automatically or person-activated via the predefinable transport paths to its place of destination (20).

10. Logistics system according to one of the claims 8 to 9,
**characterised in that**
each unit (1) of the container system can be detected and called up with its articles by means of the recognition system (33, 34) according to type, number, specification and location.

11. Logistics system according to one of the claims 8 to 10,
**characterised in that**
the identifier (33) is realised by means of RFID tags, code labels or similar.

12. Logistics system according to one of the claims 8 to 11,
**characterised in that**
the transport paths are designed with inductive means on the floor, wall or ceiling such as guiding lines or by means of optical means such as laser beam controlled or scanning beam controlled, such as by means of target points in association with laser or IR beams.

13. Logistics system according to one of the claims 8 to 12,
**characterised in that**
the units (1) of the container system transported to the predefined holding area form the store (20) at the holding area themselves.

14. Logistics system according to one of the claims 8 to 13,
**characterised in that**
units (1) of the container system can be moved by means of vehicles (9), in particular Automatic Guided Vehicles (AGV), from their location via predefined transport paths to their place of destination.

15. Logistics system according to claim 14,
**characterised in that**
the vehicles (9) are guided with remote control or beam control on the predefined transport paths, in particular by laser beam control and / or with visualisation.

16. Logistics system according to one of the claims 8 to 15,
**characterised in that**
the transport paths and the container system are adapted to each other and in particular a main transport path is provided for the places of storage for each ship deck (21).

## Revendications

1. Système de conteneurs pour le transport et le stockage de marchandises sur des navires qui présentent au moins un pont de navire avec un plancher de pont et un plafond, en particulier pour un système logistique pour navires,
- avec au moins un module (1) de conteneur qui comprend un module de base (2) et, placé dessus, ou pouvant être placé dessus, un module rapporté (3) s'étendant dans la direction de la hauteur,
- dans lequel les modules (2, 3) sont équipés d'une ou plusieurs zones de réception pour des marchandises,
***caractérisé***
- ***en ce que*** le module (2) de base comprend un dispositif de transport (5) de type châssis inférieur de transport (5),
- ***en ce que*** le châssis de transport (5) est conformé en châssis roulant,
- ***en ce que*** le dispositif de transport (5) est conformé pour plusieurs moyens de transport différents de type automatique, semi-automatique ou mécanique manuel,
- ***en ce que*** chaque module (1) de conteneur comprend au moins un dispositif de fixation par rapport à un plancher (21) du pont et/ou par rapport à un plafond (22),
- ***en ce que*** le châssis de transport (5) présente, dans une direction du module (2) de base, une forme approximativement en U inversé (8) en vue d'un déplacement et d'un transport à l'aide d'un dispositif de manoeuvre (9),
- *e**n ce qu***'approximativement transversalement à la forme en U (8), des ouvertures de prise (11) sont prévues dans ses branches (7) pour d'autres moyens de transport, en particulier pour les fourches de chariots élévateurs ou de transpalettes, et
- ***en ce que*** le système de conteneurs est conformé lui-même en moyen de transport et support côté navire.

2. Système de conteneurs selon la revendication 1,
***caractérisé***
***en ce que*** le châssis de transport (5) est équipé de roulettes pivotantes (13), et
***en ce que*** le dispositif de fixation est conformé en frein d'arrêt des roulettes pivotantes (13), un dispositif de blocage pouvant être engagé par frottement ou engagement positif, respectivement contre ou dans, le plancher (21) de pont.

3. Système de conteneurs selon l'une quelconque des revendications 1 à 2,
***caractérisé en ce que*** le module (1) de conteneur présente une compatibilité avec les dimensions européennes et présente en particulier une grille de hauteur adaptée pour la cote intérieure de conteneurs standards de longueurs différentes et/ou pour l'espace ou le local de rangement.

4. Système de conteneurs selon l'une quelconque des revendications 1 à 3,
***caractérisé***
***en ce que*** le module (1) de conteneur est conformé en étagère à conteneurs,
***en ce qu'***en fonction des marchandises à ranger, les modules (2, 3) de l'étagère (1) à conteneurs sont aménagés en conteneurs à tiroirs ou à clapets de différentes hauteurs, en conteneurs grillagés ou en conteneurs munis de barres d'angle ou de barres intermédiaires, éventuellement avec des inserts moulés.

5. Système de conteneurs selon l'une quelconque des revendications 1 à 4,
***caractérisé en ce que*** chaque étagère (1) à conteneurs et/ou chaque module (2, 3) est muni d'un marquage d'identification (33), en particulier sous forme de code à barres, de transpondeur ou d'étiquette RFID (33).

6. Système de conteneurs selon l'une quelconque des revendications 1 à 5,
***caractérisé***
***en ce que*** les étagères (1) à conteneurs comprennent des moyens de jonction complémentaires pour une immobilisation fixe les unes avec les autres et/ou avec le dispositif de manoeuvre (9), et
***en ce que*** les étagères à conteneurs (1) comprennent des moyens de maintien ou de guidage pour un déplacement en toute sécurité dans/sur le navire.

7. Système de conteneurs selon l'une quelconque des revendications 1 à 6, ***caractérisé en ce que*** les étagères (1) à conteneurs sont conçues pour un agencement spécifique à l'espace de rangement, et le système de stockage, en particulier des rayons de stockage, forme un espace de rangement (20) adapté.

8. Système logistique pour navires,
- avec un système de conteneurs utilisable à bord et à terre selon l'une quelconque des revendications 1 à 7,
- avec un marquage d'identification (33) associé à au moins chaque unité (1) du système de conteneurs,
- avec un système de détection (33, 34) relevant au moins l'emplacement et/ou une zone de destination ou de rangement prédéterminable (20) de chaque unité individuelle (1) du système de conteneurs et/ou de son contenu,
- avec une unité centrale de calcul (36) pour traiter les données issues du système de détection (33, 34) avec des données enregistrées et pour commander les unités (1) du système de conteneur, en particulier en combinaison avec une unité de calcul à terre,
***caractérisé***
- ***en* ce qu'**au moins à bord, des voies de déplacement-transport prédéterminables sont prévues pour les unités (1) du système de conteneurs,
- ***en ce que*** les voies de transport sont conçues également pour le guidage automatique d'unités (1) du système de conteneurs, et
- ***en ce que*** le système de conteneurs est conformé lui-même comme moyen de transport et support à bord pour les marchandises restant sur le navire (30).

9. Système logistique selon la revendication 8,
***caractérisé***
***en ce que*** les unités (1) du système de conteneurs peuvent être remplies de marchandises à terre,
***en ce que*** les unités chargées (1) du système de conteneurs peuvent être transportées sur le navire (30),
***en ce que*** chaque unité (1) du système de conteneurs peut être détectée par le biais du marquage d'identification (33) au moyen du système de détection (34) et, au moyen de l'unité centrale de calcul (36), peut être déplacée automatiquement ou par une personne jusqu'à sa destination (20) sur les voies de transport prédéterminables.

10. Système logistique selon l'une quelconque des revendications 8 à 9,
***caractérisé en ce que*** chaque unité (1) du système de conteneurs peut être détectée et consultée avec ses marchandises au moyen du système de détection (33, 34), par type, quantité, spécification et lieu.

11. Système logistique selon l'une quelconque des revendications 8 à 10,
***caractérisé en ce que*** le marquage d'identification (33) est réalisé par des marquages RFID, des marquages à code ou analogue.

12. Système logistique selon l'une quelconque des revendications 8 à 11,
***caractérisé* en ce *que*** les voies de transport sont conçues avec des moyens de plancher, de paroi ou de plafond, comme des lignes de guidage, ou avec des moyens optiques, par exemple commandé par rayon laser ou par rayon de scannage, comme au moyen de points cibles en liaison avec des rayons laser ou IR.

13. Système logistique selon l'une quelconque des revendications 8 à 12,
***caractérisé en ce que*** les unités (1) du système de conteneurs transportées jusqu'à l'emplacement prédéterminé forment elles-mêmes le support (20) en cet emplacement.

14. Système logistique selon l'une quelconque des revendications 8 à 13,
***caractérisé en* ce *que*** des unités (1) du système de conteneurs peuvent être déplacées depuis leur emplacement jusqu'à leur lieu de destination sur des voies de transport prédéterminées au moyen d'unités de déplacement (9), en particulier au moyen d'unités de déplacement à conduite automatique (AGV).

15. Système logistique selon la revendication 14,
***caractérisé en ce que*** les unités de déplacement (9) sont guidées sur les voies de transport prédéterminées en étant commandées à distance ou par rayon, en particulier commandées par un rayon laser et/ou visualisées.

16. Système logistique selon l'une quelconque des revendications 8 à 15,
***caractérisé***
***en ce que*** les voies de transport et le système de conteneurs sont adaptés mutuellement, et
***en ce qu***'en particulier une voie de transport principale est prévue par pont (21) du bateau pour les emplacements de rangement.
